# EUROPEAN PATENT SPECIFICATION

(11) **EP 2 946 864 B1**
(45) Date of publication and mention of the grant of the patent: **29.03.2017**
(21) Application number: 15001503.0
(22) Date of filing: 19.05.2015
(51) Int. Cl.: B25J 9/00, B25J 11/00

(54) **HEAD WITH CUTTING WIRE, COMBINED WITH A ROBOTIC ARM, FOR WORKING STONE MATERIALS**
KOPF MIT SCHNEIDDRAHT, KOMBINIERT MIT EINEM ROBOTERARM ZUM BEARBEITEN VON STEINMATERIALIEN
TÊTE À FIL DE COUPE ASSOCIÉE À UN BRAS ROBOTIQUE PERMETTANT DE TRAVAILLER DES MATÉRIAUX EN PIERRE

(30) Priority: 20.05.2014 IT MI20140912
(43) Date of publication of application: 25.11.2015
(73) Proprietor: T&D Robotics Srl, 54033 Carrara (MS) (IT)
(72) Inventor: Terzago, Luca, 54033 Carrara (MS) (IT); Tognoni, Andrea, 54033 Carrara (MS) (IT)
(74) Representative: Lecce, Giovanni

(56) References cited:
- JP-A- H1 034 412
- JP-A- H05 248 102
- JP-A- H08 309 734
- US-A1- 2010 186 564
- US-A1- 2011 138 983

## Description

This invention relates to a head with cutting wire, combined with a robotic arm, for working stone materials.

More particularly, this invention relates to a head provided with a diamond-coated shaping wire, movable along several axes being connected to a robotic arm, suitable to perform machining on blocks of marble, granite, travertine, cement or concrete and stone materials in general, machining that allows obtaining shaped, artistic and architectural manufactured articles.

As is known, blocks of marble and granite are worked to obtain manufactured articles of various kinds, intended for the most diverse uses. In addition to slab-shaped pieces used, for example, to realize stairs, floors, wall-coverings and tables, using special machines, one can also obtain complex three-dimensional shapes that result in rough-hewn or semi-finished pieces for artistic products and architectural components.

The sawing of previously squared blocks of material can allow simultaneously obtaining several slab-shaped pieces through the use of machines with multiple cutting wires; for this work, the blocks of material remain stationary, while a carriage bearing the cutting/machining organs is guided to perform certain movements with a reciprocating motion.

When, instead, it has to do with deriving complex three-dimensional shapes from the blocks, such as those intended for the realization of the above-mentioned artistic or architectural manufactured articles, the machines used are typically the so-called gantry saws with shaping wire, which include a bench or a movable carriage on which the block of material to be worked is arranged and moved. A complex 3D shape is derived from the block, which is then transferred and moved on other machines for the necessary finishing.

This type of machining has many significant drawbacks. In fact, at the beginning, it involves systematically moving heavy blocks of raw material on the machine that performs the rough-hewing and, then, transferring the, similarly heavy, semi-finished pieces to different machines for the progressive finishing of the piece.

With rough-hewing, typically performed with a stubbing wheel, substantial parts of the material, which is often valuable, are eroded and, consequently, rendered unusable; this adds substantial costs to the already significant ones for performing the above operations. Moreover, the movement of the blocks and semi-finished pieces from one machine to another involves considerable effort, both in terms of time and to maintain the necessary and precise machining references on them; and, due to the need to make these movements, the risk of damaging the pieces also increases. Lastly, one should not overlook the fact that repeated movements are also dangerous for the workers, who often find themselves moving masses that easily way several tons in narrow spaces.

A solution according to the preamble of claim 1 is known from JP H08 309734 wherein an apparatus cuts material with automatic sequences, but only with movements on linear axes.

While JP H10 34412 refers to an apparatus, as well as to a method, for cutting projecting parts of a bypass pipe from a conduit. The further Japanese patent JP H05 248102 provides the for working with a cutting wire edge that is exposed only near the piece to be cut and, in any case, defines only a linear cutting movement. Further, JP H05 248102 relates to a wire cutting system, carried by an arm that can be raised to make cuts in the raised part of cement structures, while US 2010/186564 relates to a device suitable to cut, with a diamond-coated wire, sections of pipe that are gripped by a clamping jaw.

The purpose of this invention is to overcome the drawbacks listed above.

More particularly, the purpose of this invention is to provide a head with a cutting wire combined with a robotic arm for working stone materials that allows realizing, starting from blocks of marble, granite, travertine, cement, concrete and stone materials in general, three-dimensional semi-finished pieces or manufactured articles, even of complex shape, without the need to move or handle the blocks themselves, with significant advantages in terms of time, economy of machining and worker safety.

A further object of the invention is to provide a head with cutting wire, as defined above, suitable to perform calibrated rough-hewing operations on blocks of material that allow recovering and reusing the parts of the same material that are being detached.

A further and consequent purpose of the invention is to provide a head with cutting wire able to substantially reduce the time and cost of the rough-hewing the material constituting the blocks compared to the traditional operations performed with stubbing wheels and the like.

Another purpose of the invention is to provide a head with cutting wire that does not require the predisposition of references on the semi-finished piece, since it is not necessary to reposition it on other machines or machining equipment.

A further purpose of the invention is to make available to users a head with cutting wire, combined with a robotic arm for working stone materials, suitable to provide high durability and reliability over time and also such as to be easily and economically constructed.

These and still other purposes are achieved by the head with cutting wire combined with a robotic arm for working stone materials of this invention, in accordance with independent claim 1.

The constructive and functional characteristics of the head with cutting wire combined with a robotic arm for working stone materials of this invention will be better understood from the detailed description which follows, in which reference is made to the accompanying drawings that illustrate a preferred, and not limiting, embodiment and wherein:
Figure 1 schematically represents a perspective view of the head with cutting wire of this invention combined with the robotised arm of an anthropomorphic robot;
Figure 2 schematically represents a further perspective view, from a different angle, of the same head with the cutting wire and related robotised arm;
Figure 3 schematically represents a perspective view from the upper front of the head with cutting wire of this invention;
Figure 4 schematically represents a perspective view from the opposite lower front of the head with cutting wire of this invention;
Figure 5 schematically represents an exploded view of the framework that forms the head with cutting wire according to the invention;
Figure 6 schematically represents a perspective view of the head with cutting wire and the anthropomorphic robot separated from each other;

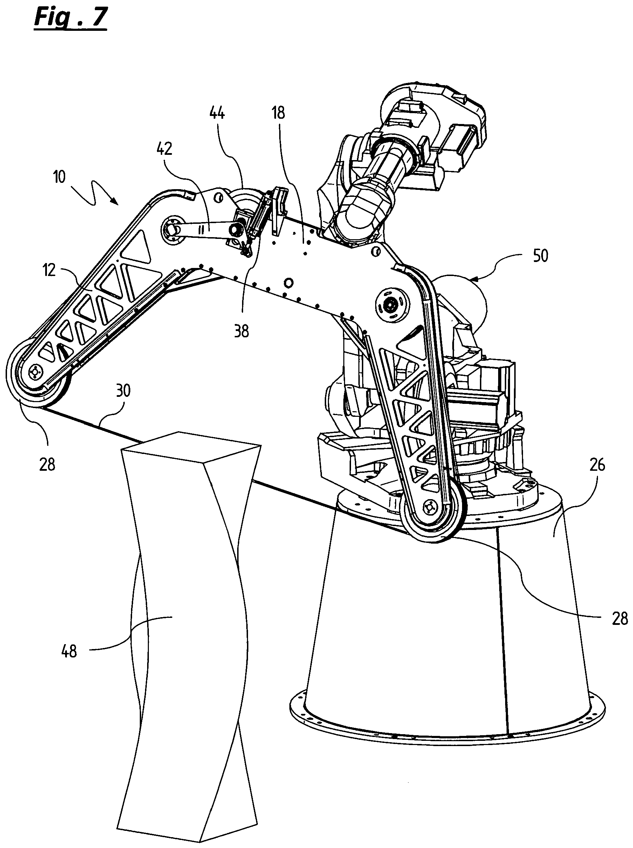

Figure 7 schematically represents a perspective view of the head with cutting wire and the anthropomorphic robot placed, by way of example, alongside a complex three-dimensional manufactured article achievable with said head.

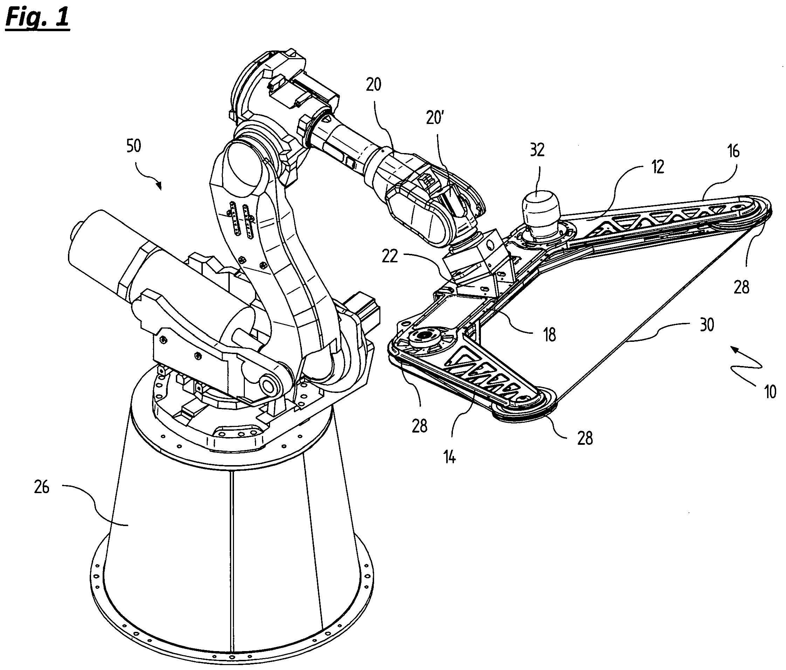

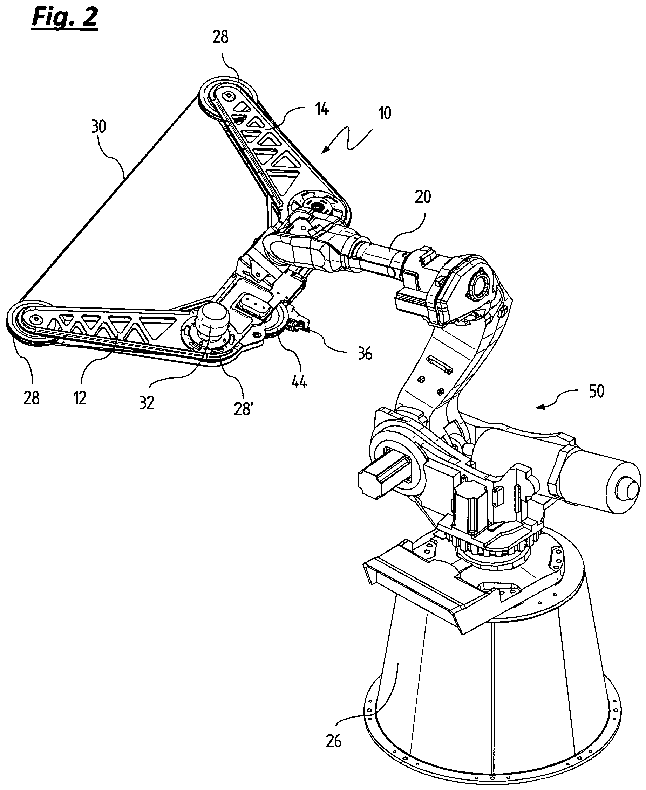

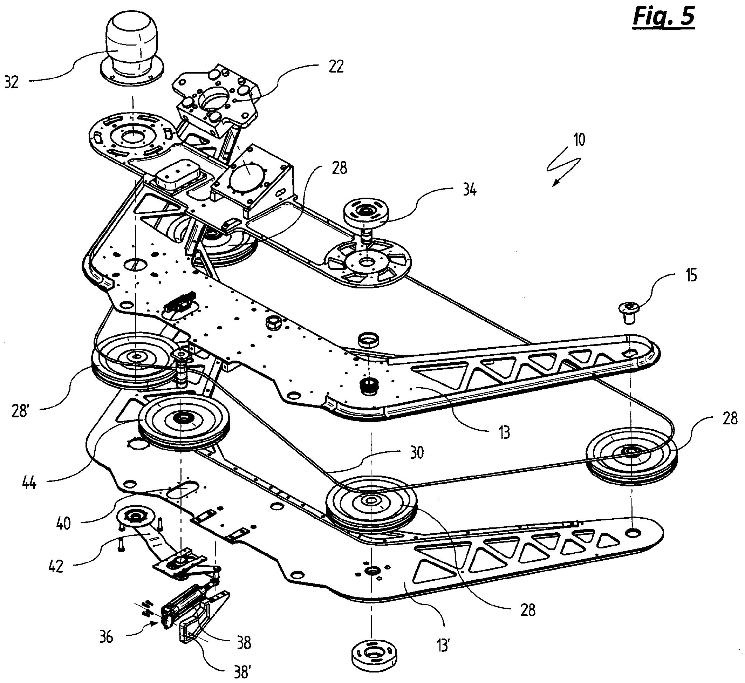

With initial reference to Figures 1, 2 and 5, the head with cutting wire of this invention, indicated as a whole by reference number 10, comprises a shaped metal framework 12, formed by two specular plate-shaped elements 13,13', substantially U-shaped. Said elements are mutually superposed and fastened with bolts 15 or equivalent retaining bodies to form the above-mentioned framework 12; between elements 13 and 13', which are suitably spaced apart, space remains for arranging a plurality of pulleys, which will be described later, along which the cutting wire, or shaping wire, indicated with 30, extends. The configuration and fastening means of the plate-shaped elements 13 and 13' are shown in particular, in Figure 5. The framework 12 thus formed comprises opposed side branches 14 and 16, spread apart from each other, as well as an integral central connection branch 18; said branch 18 is provided, in a central position, with a flange 22 for fixing and quick change with automatic connections, known per se, made integral to the upper exposed face of the plate-shaped element 13 of the framework 12, for the connection of the latter to the wrist 20' of an arm 20 of a manipulator with several degrees of freedom or anthropomorphic robot shown schematically with 50; the latter, substantially known and advantageously of the type with six degrees of freedom, is supported by a base 26 of suitable shape and size. The wrist 20' of the arm 20 of the manipulator 50 supports a conventional coupling 20', complementary to the fastening flange 22; the latter allows, where necessary, to quickly replace the head 10 with another having different dimensions or characteristics than the one previously installed, or with a different tool such as, for example, a grinding wheel or an electro-spindle (not illustrated). On the framework 12, in the space existing between the plate-shaped elements 13 and 13', is installed a plurality of pulleys 28,28' along which said cutting wire 30, preferably diamond-coated, flows and is returned; in particular, the pulleys 28 are arranged in correspondence with each of the free ends of the branches 14,16 of said framework and the opposite end zones in which the same branches are connected to the central branch 18. One of the pulleys, indicated with 28', is set in rotation by an electric motor 32 to continuously move the cutting wire 30, preferably always in the same direction. The motor 32 is advantageously fixed, like the flange 20, to the exposed upper face of the plate-shaped element 13 of the framework 12.

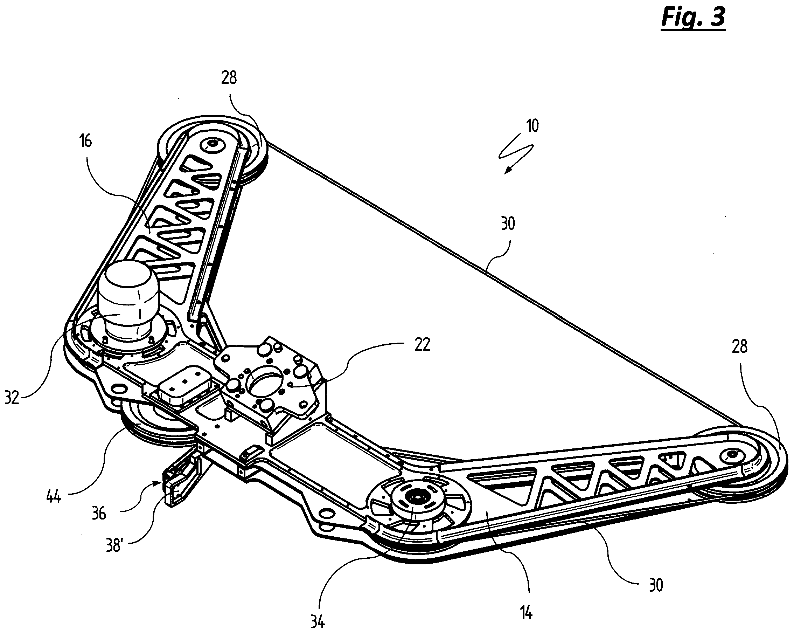

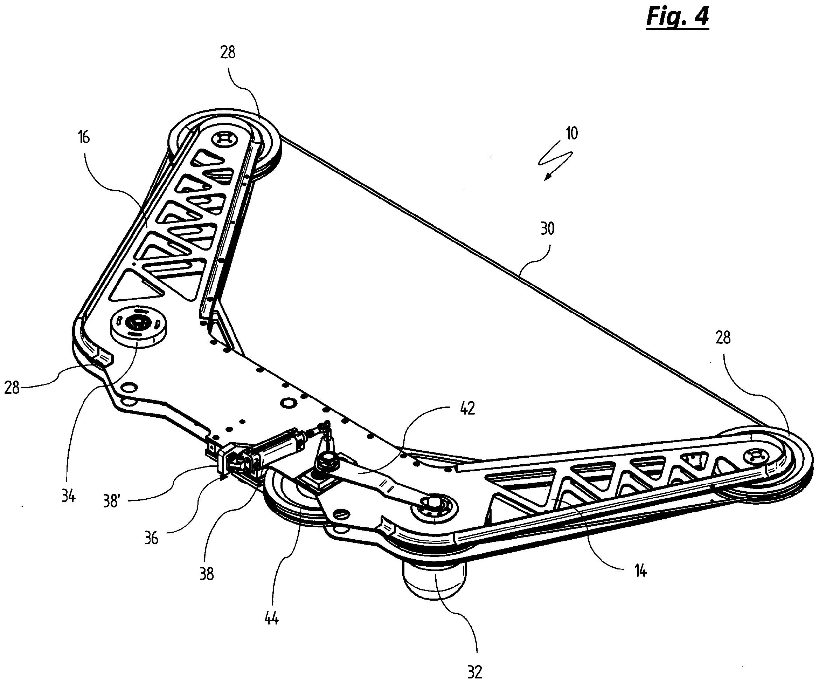

As can be seen in particular from Figures 3 and 4, on another of the pulleys 28 and on the same upper face of said element 13 (Figs. 3 and 5) is mounted a load cell 34, suitable to measure the stress of the cutting wire 30 in motion; the load cell 34 is coupled with a pneumatic tensioner 36, placed in correspondence of the cell itself on the opposite rear face of the framework 12 defined by the plate-shaped element 13' (Figs. 4 and 5). Said tensioner comprises, in the preferred embodiment referred to in the figures, a pneumatic cylinder 38, whose rod is engaged with one end of a lever 42 to lead it to move along a groove or slot 40 and with the other end to a bracket 38' integral to said framework 12; the lever 42 can possibly be combined with a coil spring. Said slot 40 is created on the plate-shaped element 13' to which the cylinder 38 is also fixed. The same end of the lever 42 is engaged with a further pulley 44, disposed like the others between the plate-shaped elements 13 and 13' and intended to act in thrust on the cutting wire 30 as an effect of the movement of the lever 42 actuated by the stem of the cylinder 38, as schematically shown in particular in Figure 5; in this way, the wire 30 retrieves the correct tension. The opposite end of the lever 42 is pivotally secured to said element 13 of the framework 12. In any case, it is to be anticipated that, on said framework 12 of the head 10 with the cutting wire or shaping wire 30 there can be arranged more load cells 34 and/or pneumatic tensioners 36.

The electrical and pneumatic power supply for, respectively, the motor 32 and the load cell 34, as well as for the cylinder 38 of the pneumatic tensioner 36, are realised by known means starting from connections on the coupling 20' of the arm 20 and on the fixing flange 22 of the framework 12. Advantageously, to the latter is also fastened the terminal of a duct, fixed or orientable (not illustrated), through which is fed a cooling fluid, typically water, for the diamond-coated wire 30.

The functioning of the head 10 with cutting wire 30, combined with the arm 20 of the manipulator 50, is managed by a single software application, advantageously programmed with an off-line method using CAD-CAM to drive both the phases of working with said wire, which also include the control and the tension of the wire itself, and those performed with other tools, such as, for example, electro-spindles; these tools are automatically picked, as necessary, from the conventional magazine (not illustrated), placed adjacent to said manipulator, and the replacement of the tool that, at the time, equips the head 10, takes place easily thanks to the flange 22 for fixing and quick change with automatic connections provided on the framework 12.

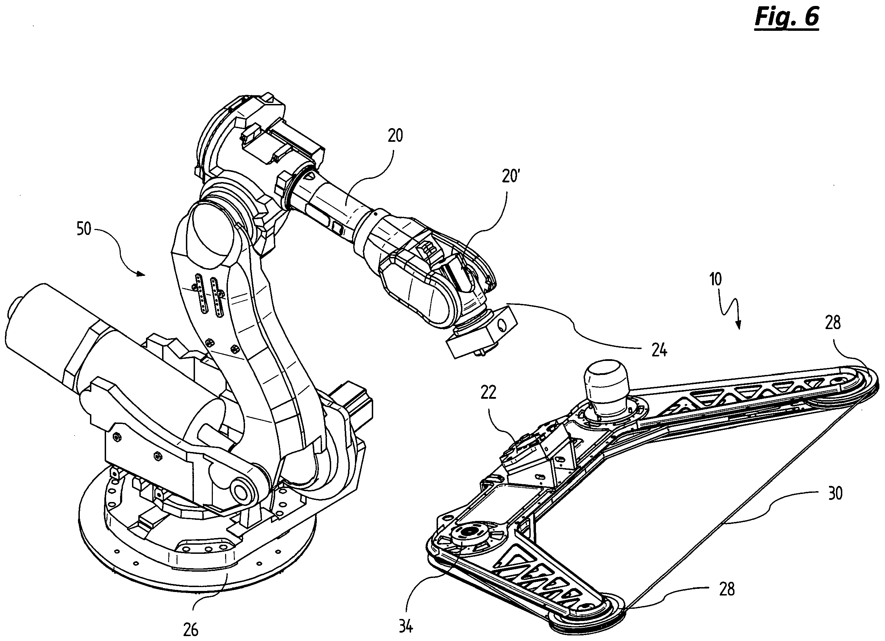

Figure 6 illustrates, by way of example, a manufactured article 48 of complex three-dimensional shape obtainable through the use of the head 10 of this invention and without the need to move or orient the manufactured article itself. In fact, the movement on several axes of the head 10 through the arm 20 of the anthropomorphic robot 50 conducts the head itself, and thus the diamond-coated wire or shaping wire 30, to follow the programmed path, continuously realizing parts of surfaces of rectilinear, mixed-linear, concave and/or convex parts of surfaces on the manufactured article 48.

As can be seen from the foregoing, the advantages achieved by the invention are clear.

With the use of the head 10 of this invention, combined with the anthropomorphic robot 50, one can also obtain artistic and architectural manufactured articles of very complex shape; it is not necessary to provide a mobile bench or carriage, as on gantry machines, in order to repeatedly move the block of material being worked, given that it is the head 10 with shaping 30 that has the possibility to move in space since carried and moved by the arm 20 of said 50, suitably programmed with the movements. This solution not only allows obtaining a remarkable speed of execution of the work and thus a substantial reduction of production costs, but also recovering substantial portions of material that are not eroded; negative effects on the environment are further appreciably reduced. In fact, it is intuitive fact that a lesser amount of unusable material, as well as the related machining sludge to be disposed of, directly and incisively respects the current trend of privileging environmental protection policies.

Moreover, one should not overlook the advantage resulting from increased safety for operators, who do not have to perform and monitor potentially dangerous manoeuvres due to frequent movements of heavy blocks of raw material or semi-finished pieces. It follows that the blocks themselves and semi-finished pieces are advantageously less subject to the potential danger of damage.

## Claims

1. A head (10) with a cutting or shaping wire (30) suitable to perform complex work on blocks (48) of marble, granite, travertine, cement or concrete and stony materials in general, intended to obtain shaped, artistic and architectural manufactured articles, comprising an arm (20) of a manipulator or anthropomorphic robot (50) with several degrees of freedom and with a pair of plate-shaped elements (13, 13') that define a framework (12) with opposed branches (14, 16) connected to a central connection branch (18), provided with a plurality of pulleys (28, 28') along which said cutting wire (30) extends, **characterized in that** said head (10) is movable in space according to programmed paths above and around the blocks (48) maintained in a condition of constant stability and position, to perform machining operations on them that result in surfaces having rectilinear, mixed-linear, concave and/or convex development, and **in that** the pulleys (28, 28') are arranged between the plate-shaped elements (13, 13') in correspondence with each of the free ends of the branches (14, 16) of said framework (12) and the opposed end zones in which the same branches are connected to the central branch (18) of the same.

2. The head according to claim 1, **characterized in that** one of the pulleys (28, 28') is set in rotation by an electric motor (32) fixed to the upper exposed face of the plate-shaped element (13) of the framework (12) for continuously moving the cutting wire (30).

3. The head according to claim 1, **characterized in that**, on at least one of the pulleys (28) is mounted a load cell (34), suitable to measure the stress and possible failure of the cutting wire (30) in motion, said cell being combined with a pneumatic tensioner (36) placed on the front of the framework (12) defined by the plate-shaped element (13').

4. The head according to claim 3, **characterized in that** the pneumatic tensioner (36) comprises a pneumatic cylinder (38) whose rod is engaged with one end of a lever (42) to lead it to move along a groove or slot (40).

5. The head according to claim 4, **characterized in that** said end of the lever (42) is engaged with a further pulley (44), disposed like the others between the plate-shaped elements (13) and (13') and intended to act in thrust on the cutting wire (30) as an effect of the movement of the lever (42) actuated by the stem of the cylinder (38).

6. The head according to claim 1, **characterized in that** it comprises a flange (22) formed on the same framework (12) interfaced with said arm (20), of fastening and quick change with automatic connections.

7. The head (10) according to claim 1, **characterized in that** said plate-shaped elements (13, 13') are substantially U-shaped, mutually superposed and spaced apart and fastened with bolts (15) or equivalent retaining bodies to form the above-mentioned framework (12).

8. The head (10) according to claim 1, **characterized in that** in said frame (12) opposed side branches (14) and (16) are mutually spread apart, and the integral central connection branch (18) is provided, in a central position, with said flange (22) which connects to the wrist (20') of said manipulator (50) with several degrees of freedom.

## Patentansprüche

1. Kopf (10) mit einem Schneid- oder Formdraht (30), der zum Ausführen komplexer Bearbeitung auf Blöcken (48) aus Marmor, Granit, Travertin, Zement oder Beton und steinartigen Materialien im Allgemeinen geeignet ist, vorgesehen zum Erhalten geformter, künstlerischer und architektonischer handgefertigter Gegenstände, umfassend einen Arm (20) eines Manipulators oder anthropomorphen Roboters (50) mit verschiedenen Freiheitsgraden und mit einem Paar von plattenförmigen Elementen (13, 13'), welche einen Rahmen (12) miteinander gegenüberliegenden Zweigen (14, 16) definieren, die an einem zentralen Verbindungszweig (18) angeschlossen sind, versehen mit mehreren Riemenscheiben (28, 28'), entlang welcher der Schneiddraht (30) sich erstreckt, **dadurch gekennzeichnet, dass** der Kopf (10) im Raum gemäß programmierten Pfaden oberhalb und um die Blöcke (48) herum bewegbar ist, die in einem Zustand konstanter Stabilität und Position gehalten werden, um Bearbeitungsvorgänge auf diesem auszuführen, welche zu Oberflächen mit geradliniger, gemischt linearer, konkaver und/oder konvexer Entwicklung führen, und dadurch, dass die Riemenscheiben (28, 28') zwischen den plattenförmigen Elementen (13, 13') in Entsprechung zu den freien Enden der Zweige (14, 16) des Rahmens (12) und der gegenüberliegenden Endzonen angeordnet sind, in welchen die selben Zweige an dem zentralen Zweig (18) desselben angeschlossen sind.

2. Kopf nach Anspruch 1, **dadurch gekennzeichnet, dass** eine der Riemenscheiben (28, 28') durch einen Elektromotor (32) in Rotation versetzt wird, der an der oberen exponierten Fläche des plattenförmigen Elements (13) des Rahmens (12) zum kontinuierlichen Bewegen des Schneiddrahts (30) befestigt ist.

3. Kopf nach Anspruch 1, **dadurch gekennzeichnet, dass** auf zumindest einer der Riemenscheiben (28) eine Messdose (34) angebracht ist, die zum Messen der Spannung und eines möglichen Fehlers des bewegten Schneid-drahts (30) geeignet ist, wobei die Dose mit einer pneumatischen Spannungsvorrichtung (36) kombiniert ist, die auf der Vorderseite des Rahmens (12) platziert ist, der durch das plattenförmige Element (13') definiert ist.

4. Kopf nach Anspruch 3, **dadurch gekennzeichnet, dass** die pneumatische Spannvorrichtung (36) einen pneumatischen Zylinder (38) umfasst, dessen Stange mit einem Ende eines Hebels (42) im Eingriff steht, um diesen zur Bewegung entlang einer Nut oder eines Schlitzes (40) zu führen.

5. Kopf nach Anspruch 4, **dadurch gekennzeichnet, dass** das Ende des Hebels (42) mit einer weiteren Riemenscheibe (44) im Eingriff steht, die wie die anderen zwischen den plattenförmigen Elementen (13) und (13') angeordnet ist, um zur Schubwirkung auf den Schneiddraht (30) zu wirken als ein Effekt der Bewegung des Hebels (42), der durch den Schaft des Zylinders (38) betätigt wird.

6. Kopf nach Anspruch 1, **dadurch gekennzeichnet, dass** er einen Flansch (22) umfasst, der auf dem selben Rahmen (12) ausgebildet ist, der mit dem Arm (20) zum Befestigen und schnellen Tausch mit automatischen Verbindungen gekoppelt ist.

7. Kopf (10) nach Anspruch 1, **dadurch gekennzeichnet, dass** die plattenförmigen Elemente (13, 13') im Wesentlichen U-förmig, gegenseitig überlagert und beabstandet und mit Bolzen (15) oder äquivalenten Rückhaltekörpern befestigt sind, um den vorstehenden Rahmen (12) auszubilden.

8. Kopf (10) nach Anspruch 1, **dadurch gekennzeichnet, dass** in dem Rahmen (12) Zweige (14) und (16) der gegenüberliegenden Seite gegenseitig verteilt sind, und der integrale zentrale Verbindungszweig (18) in einer zentralen Position mit dem Flansch (22) vorgesehen ist, welcher an dem Gelenk (20') des Manipulators (50) mit verschiedenen Freiheitsgraden angeschlossen ist.

## Revendications

1. Tête (10) avec un fil de coupe ou de mise en forme (30) adaptée pour réaliser un travail complexe sur des blocs (48) de marbre, granit, travertin, ciment ou béton et des matériaux en pierre en général, destinée à obtenir des articles manufacturés architecturaux, artistiques et mis en forme, comprenant un bras (20) d'un manipulateur ou robot anthropomorphique (50) avec plusieurs degrés de liberté et avec une paire d'éléments en forme de plaque (13, 13') qui définissent une ossature (12) à branches opposées (14, 16) reliées à une branche de liaison centrale (18), dotée d'une pluralité de poulies (28, 28') le long desquelles ledit fil de coupe (30) s'étend, **caractérisée en ce que** ladite tête (10) est mobile dans l'espace selon des parcours programmés au-dessus et autour des blocs (48) maintenus dans un état de stabilité et de position constantes, pour réaliser des opérations d'usinage sur ceux-ci résultant en des surfaces ayant un développement rectiligne, linéaire mixte, concave et/ou convexe, et **en ce que** les poulies (28, 28') sont agencées entre les éléments en forme de plaque (13, 13') en correspondance avec chacune des extrémités libres des branches (14, 16) de ladite ossature (12) et les zones d'extrémité opposées dans lesquelles les mêmes branches sont reliées à la branche centrale (18) de celle-ci.

2. Tête selon la revendication 1, **caractérisée en ce que** l'une des poulies(28, 28') est mise en rotation par un moteur électrique (32) fixé à la face exposée supérieure de l'élément en forme de plaque (13) de l'ossature (12) pour déplacer en continu le fil de coupe (30).

3. Tête selon la revendication 1, **caractérisée en ce que**, sur au moins une des poulies (28) est montée une cellule de charge (34), adaptée pour mesurer la contrainte et la possible défaillance du fil de coupe (30) en mouvement, ladite cellule étant combinée à un tendeur pneumatique (36) placé à l'avant de l'ossature (12) définie par l'élément en forme de plaque (13').

4. Tête selon la revendication 3, **caractérisée en ce que** le tendeur pneumatique (36) comprend un vérin pneumatique (38) dont la tige est en prise avec une extrémité d'un levier (42) pour l'amener à se déplacer le long d'une rainure ou fente (40).

5. Tête selon la revendication 4, **caractérisée en ce que** ladite extrémité du levier (42) est en prise avec une autre poulie (44), disposée comme les autres entre les éléments en forme de plaque (13) et (13') et destinée à agir en poussée sur le fil de coupe (30) comme un effet du mouvement du levier (42) actionné par la tige du vérin (38).

6. Tête selon la revendication 1, **caractérisée en ce qu'**elle comprend une bride (22) formée sur la même ossature (12) interfacée avec ledit bras (20), de fixation et changement rapide avec des liaisons automatiques.

7. Tête (10) selon la revendication 1, **caractérisée en ce que** lesdits éléments en forme de plaque (13, 13') sont sensiblement en forme de U, mutuellement superposés et espacés et fixés avec des boulons (15) ou corps de retenue équivalents pour former l'ossature susmentionnée (12).

8. Tête (10) selon la revendication 1, **caractérisée en ce que** dans ladite ossature (12) des branches latérales opposées (14) et (16) sont mutuellement écartées, et la branche de liaison centrale intégrante (18) est dotée, dans une position centrale, de ladite bride (22) qui est reliée au poignet (20') dudit manipulateur (50) avec plusieurs degrés de liberté.
